# EUROPEAN PATENT APPLICATION

(11) **EP 0 590 956 A1**
(43) Date of publication of application: **06.04.1994**
(21) Application number: 93307721.6
(22) Date of filing: 29.09.1993
(51) Int. Cl.: B29C 67/00

(54) **Photo-solidification modelling method with improved ability to restrain distortion**

(30) Priority: 01.10.1992 JP 289653/92
(71) Applicant: CMET, Inc., Tokyo-to (JP)
(72) Inventor: Wei, Jie, c/o Cmet, Inc., Ota-ku, Tokyo-to (JP); Hayano, Seiji, c/o Cmet, Inc., Ota-ku, Tokyo-to (JP)
(74) Representative: Bannerman, David Gardner

(57) **Abstract**

Distortion of a model fabricated by a photo-solidified method is restrained. For this purpose, the shifting direction of a scanning line of a light beam is reversed in every layer or every multiple layers. Stress which tends to cause distortion in each layer is canceled layer by layer by reversing the shifting direction, and totally the modeled shape is free from distortion. As the result, the dimensional accuracy of the photo-solidified model is improved.

## Description

### BACKGROUND OF THE INVENTION

### 1. Field of the Invention

The present invention relates to improvement of a photo-solidification modeling method.

### 2. Description of the Prior Art

There has been developed a technique of modeling a three-dimensional shape by using a photo-solidifying resin, the shape being defined by three-dimensional data designed by a three-dimensional CAD system or measured by a three-dimensional measuring instrument, so as to embody such three-dimensional data. An example of such a technique is described in Rev. Sci. Instrum. Vol.52. No.11 Nov. 1981, p.1770-1773.

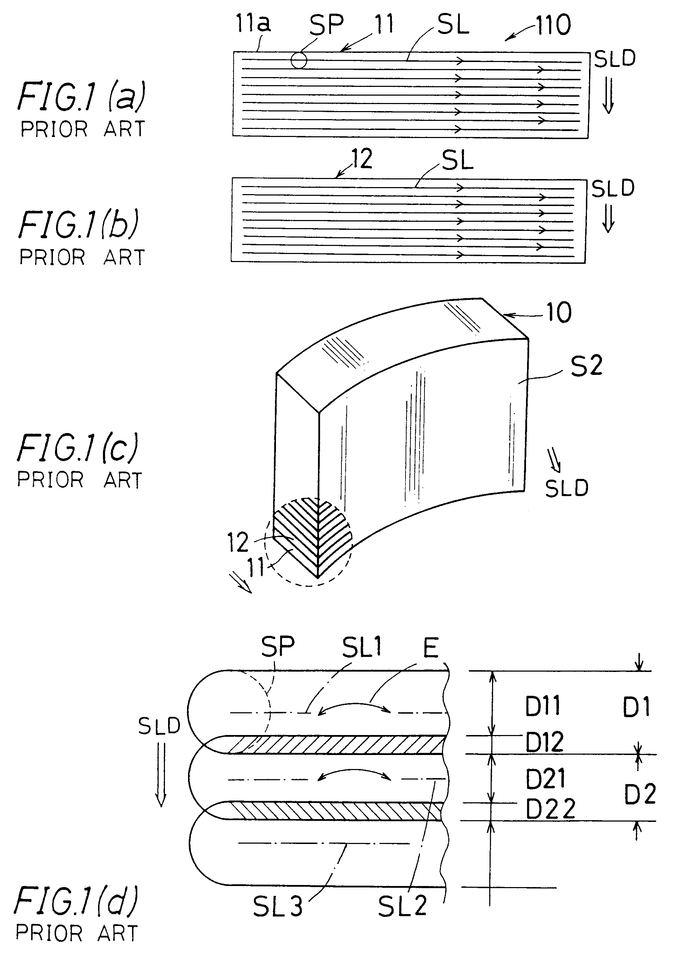

In this technique whose conception is shown in FIG. 1, a thin layer 110 of a photo-solidifying resin in the unsolidified state is exposed to a light beam SP having a small diameter. In this case, the light beam SP travels along a scanning line SL, and the scanning line SL is shifted in a direction SLD. The scanning range of the scanning line SL is controlled or the light beam SP is on/off controlled in association with the scanning point of the light beam SP to have only a specified region 11a in the thin layer 110 exposed to the light. As the result, a sectional solidified layer 11 corresponding to the light exposed region 11a is fabricated.

The above process is repeated for the second sectional layer 12, the third sectional layer and others in sequence, until a three-dimensional photo-solidified model 10 as shown in FIG. 1(c) is completed. The upper sectional solidified layer is adhered to the lower sectional solidified layer while the upper layer is exposed to the light.

The photo-solidified model 10 as shown in FIG. 1(c) can be fabricated by moving the light beam SP along the scanning line SL and shifting the scanning line SL at a certain pitch in the shifting direction (SLD direction) in sequence for every sectional layer 11, 12---, as shown in FIGS. 1(a) and 1(b). Hereinafter, the direction in which the scanning line SL extends will be referred to as a traveling direction, and the direction perpendicular to the traveling direction, i.e. the direction in which the scanning line SL is shifted will be referred to as a shifting direction.

The applicant of the present invention has, however, found after various experiments that this method has a tendency of causing such distortion as shown in FIG. 1(c). More specifically, the solidified model is apt to be curved, with the last scanned surface S2 defining the inner periphery of such a curved model.

### SUMMARY OF THE INVENTION

It is an object of the present invention to provide a photo-solidification modeling method with improved ability to restrain distortion.

According to the present invention, there is provided a photo-solidification modeling method comprising steps of scanning a thin layer of a photo-solidifying resin in the unsolidified state by a light beam traveling along a scanning line to selectively expose the thin layer to the light so as to fabricate a sectional solidified layer corresponding to the light exposed region, and repeating the sectional solidified layer fabricating step so as to stack such sectional solidified layer in sequence, until a three-dimensional photo-solidified model is completed, the method being characterized in that a shifting direction of the scanning line of the light beam is reversed when the sectional solidified layer fabricating step is repeated.

It is supposed at present that such distortion as shown in FIG. 1(c) is generated as follows.

In FIG. 1(d) which is an enlarged view of a part of FIG. 1(a), the light beam SP travels along the scanning lines SL1 and SL2. If there were no super-exposed-region between the scanning lines, such scanning would result in only an array of solidified lines and could not provide a solidified plane. For this reason, scanning must be executed with the exposed regions partly super-exposed as shown by D12 and D22 in FIG. 1(d).

In FIG. 1(d), exposure along the scanning line SL1 causes a region D1 to be solidified. Then, exposure along the scanning line SL2 causes another region D2 to be solidified, and at this time, the region D12 in the previously solidified region D1 is super-exposed.

Thus, the region D1 solidified by exposure along the scanning line SL1 is divided into a region D11 exposed once and the region D12 exposed twice. As the result, the region D12 is solidified harder and consequently contracted more greatly at the region D12 than at D11.

A similar phenomenon occurs in exposure along the scanning line SL3, and in this case a region D22 in the region D2 is more greatly contracted. Such a phenomenon is accumulated, causing a tendency of curving the sectional solidified layer 11 with the last scanned side defining the inner periphery of the curve. It is supposed that this tendency effects on the whole sectional solidified layers 11 and 12 and others, causing such distortion of the solidified model 10 as shown in FIG. 1(c). This supposition has been derived from various experiments and examination by the applicant.

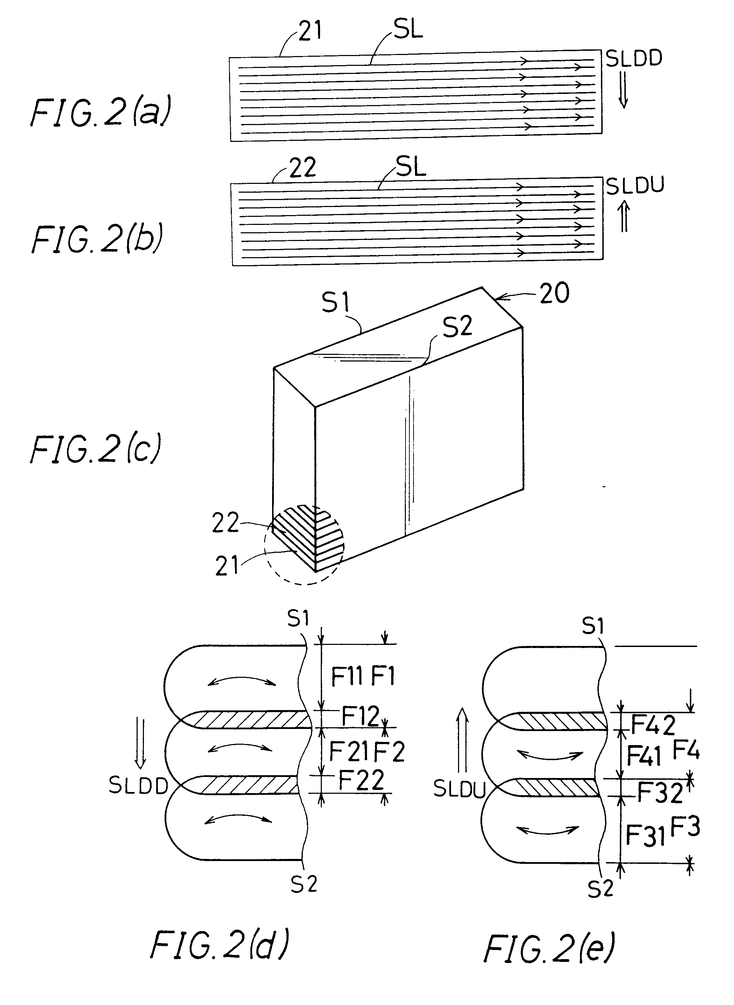

According to the present invention, a shifting direction of a scanning line of a light beam is typically reversed in every sectional layer, as shown in FIG. 2. Therefore, stress which tends to cause deflection toward the side S2 occurs in a sectional layer, while stress which tends to cause deflection toward the opposite side S1 occurs in another sectional layer. As the result, the stress in each solidified layer is canceled layer by layer, permitting the model to be fabricated with little distortion, as shown in FIG. 2(c).

### BRIEF DESCRIPTION OF THE DRAWINGS

FIG. 1 illustrates a photo-solidification modeling method of the prior art;
FIG. 2 illustrates the photo-solidification modeling method according to a first embodiment of the present invention;
FIG. 3 shows another example of the first embodiment;
FIG. 4 illustrates the photo-solidification modeling method according to a second embodiment of the present invention;
FIG. 5 illustrates the photo-solidification modeling method according to a third embodiment of the present invention; and
FIG. 6 illustrates the photo-solidification modeling method according to a fourth embodiment of the present invention.

### DETAILED DESCRIPTION OF THE PREFERRED EMBODIMENTS

FIG. 2 illustrates a process of modeling a flat rectangular prism model 20 as shown in FIG. 2(c). The shifting direction SLDD in the first sectional layer 21 as shown in FIG. 2(a) is opposite to the shifting direction SLDU in the second sectional layer 22 as shown in FIG. 2(b). Similarly, in the third and fifth sectional layers (not shown), the scanning lines are shifted in the shifting direction SLDD, while in the fourth and sixth sectional layers (not shown) the coming lines are shifted in the shifting direction SLDU. Thus, the shifting direction is reversed in every sectional layer.

As shown in FIG. 2(d), there occurs in the first, third and fifth sectional layers stress causing deflection toward the surface S2, while as shown in FG. 2(e), there occurs in the second, fourth and sixth sectional layers stress causing deflection toward the surface S1. As the result, the inner stresses are totally canceled, permitting fabrication of the model 20 with little distortion as shown in FIG. 2(c).

It should be noted that the shifting direction SLD need not be reversed in every layer, but it may be reversed, for example, in every two or three layers.

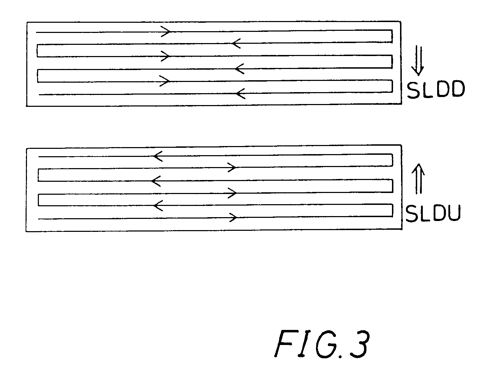

The traveling direction of the light beam along the scanning line may be determined as desired. For example, the traveling direction may be constant at all times, as shown in FIGS. 2(a) and 2(b), or it may be reversed simultaneously with the shifting direction. The scanning system may be, as desired, in a one-way system in FIG. 2 or in an alternate system in FIG. 3.

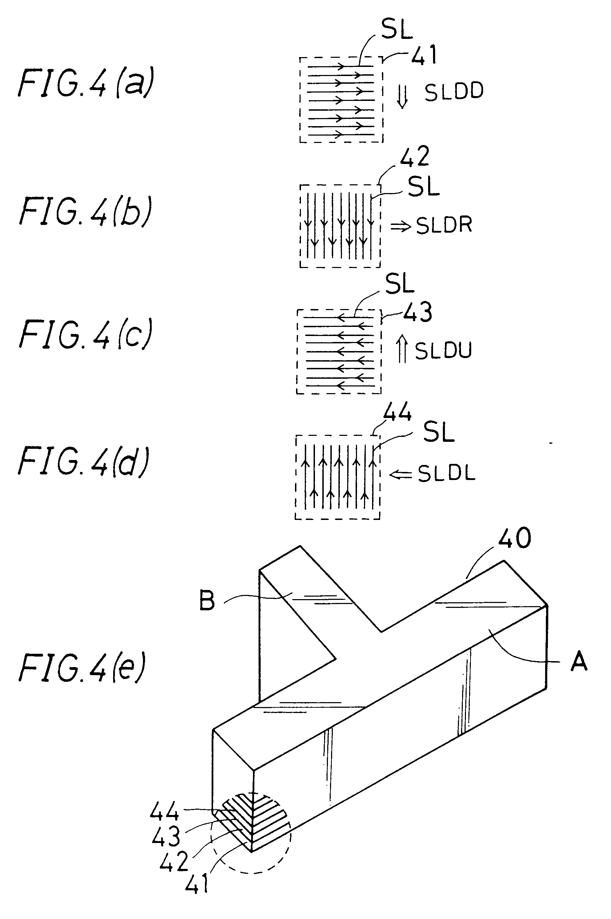

FIG. 4 shows a second embodiment, in which four different shifting directions are employed. In this case, the first and fifth layers are scanned in a shifting direction SLDD, the second and sixth layers in a direction SLDR, the third and seventh layers in a direction SLDU and the fourth and eighth layers in a direction SLDL. With this arrangement, respective stresses are canceled between the first and third layers and between the second and fourth layers, so that distortion in either direction can be restrained. Therefore, a three-dimensional model extending in two directions as shown in FIG. 4(e) can be prevented from any distortion in all directions.

Change of the shifting directions in FIGS. 4(a), 4(b), 4(c) and 4(d) need not be carried out in every layer, but it may be carried out in every two or three layers. The sequence of the shifting directions may be other than the order from (a) to (b), (c) and then (d), and, for example, it may be in the order from (a) to (b), (d) and then (c). What is important is that the shifting direction is reversed between adjacent or neighbor sectional layers so as to cancel stresses.

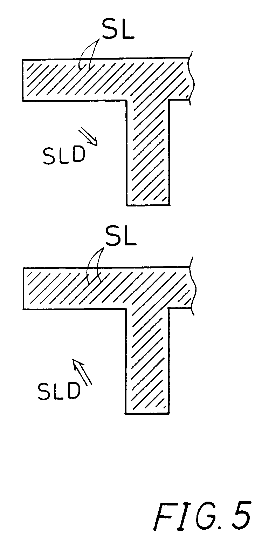

Though, in the above embodiments, the scanning lines are parallel to a side of an model to be solidified, they may not be parallel to any side of the model, as shown in FIG. 5. In such a case, the shifting direction SLD is also reversed in every layer or every multiple layers to restrain distortion.

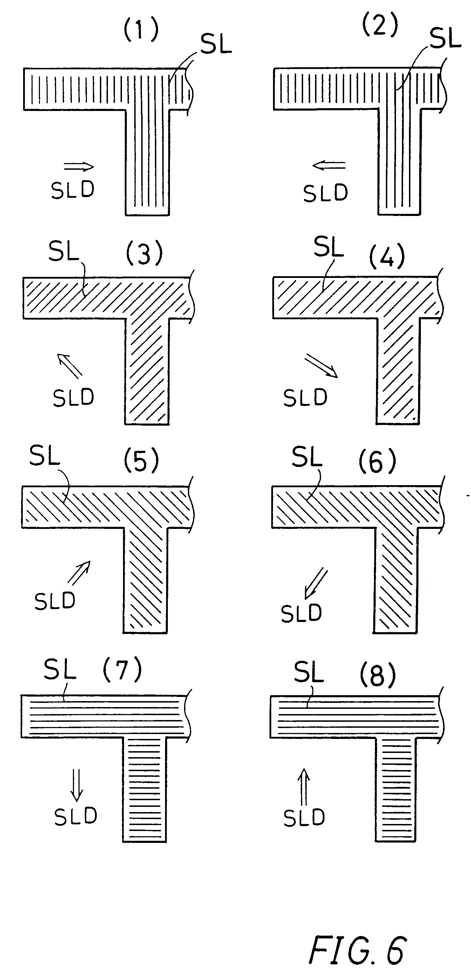

FIG. 6 shows an example in which both of the traveling direction and the shifting direction of the light beam are changed in every layer in such a manner that eight patterns of combination of the traveling direction and the shifting direction shown from FIG. 6(1) to 6(8) are circulated to stack the layers in sequence. This is effective to restrain distortion in all directions, assuring the model in good accuracy. In this embodiment, the shifting direction is changed among the eight patterns.

As described above, after various experiments and examination as to distortion in the photo-solidification modeling method, it has been found that the shifting direction is critical to occurrence of such distortion, and on the basis of this theory, the shifting direction is reversed to restrain distortion. Therefore, the photo-solidified model fabricated by this method has little distortion and good dimensional accuracy.

While the invention has been described with reference to preferred embodiments thereof, it is to be understood that modifications or variations may be easily made without departing from the scope of the present invention which is defined by the appended claims.

## Claims

1. A photo-solidification modeling method having improved ability to restrain distortion comprising steps of scanning a thin layer of a photo-solidifying resin in the unsolidified state by a light beam traveling along a scanning line to selectively expose the thin layer to the light so as to fabricate a sectional solidified layer corresponding to the light exposed region, and repeating said sectional solidified layer fabricating step so as to stack such sectional solidified layer in sequence, until a three-dimensional photo-solidified model is completed, the method being characterized in that a shifting direction of the scanning line of the light beam is reversed when said sectional solidified layer fabricating step is repeated.

2. The photo-solidification modeling method as defined in claim 1, wherein the shifting direction of the light beam is reversed in every layer.

3. The photo-solidification modeling method as defined in claim 1, wherein the shifting direction of the light beam is reversed in every multiple layers.

4. The photo-solidification modeling method as defined in claim 1, wherein the shifting direction of the light beam is reversed between two directions.

5. The photo-solidification modeling method as defined in claim 1, wherein the shifting direction of the light beam is reversed among four directions.

6. The photo-solidification modeling method as defined in claim 1, wherein the shifting direction of the light beam is reversed among eight directions.

7. The photo-solidification modeling method as defined in claim 1, wherein the shifting direction and a traveling direction of the light beam are reversed simultaneously.
